# DEMANDE DE BREVET EUROPEEN

(11) **EP 0 593 359 A1**
(43) Date de publication de la demande: **20.04.1994**
(21) Numéro de dépôt: 93402524.8
(22) Date de dépôt: 13.10.1993
(51) Int. Cl.: B64C 25/50

(54) **Dispositif de manoeuvre en orientation de roues équipant l'extrémité inférieure d'une jambe d'atterrisseur d'aéronef**

(30) Priorité: 16.10.1992 FR 9212417
(71) Demandeur: MESSIER BUGATTI, F-78140 Velizy Villacoublay (FR)
(72) Inventeur: Derrien, Michel, F-78000 Versailles (FR); Brisedou, Philippe, F-94260 Fresnes (FR)
(74) Mandataire: Jaunez, Xavier

(57) **Abrégé**

L'invention concerne un dispositif de manoeuvre en orientation des roues autour de l'axe d'une jambe d'atterrisseur d'aéronef.

Conformément à l'invention, le caisson (2) de la jambe (1) présente extérieurement, au-dessus du manchon tournant (8), une extension latérale (13a) à laquelle le corps d'un vérin de manoeuvre (10a) est suspendu par une articulation à la cardan (14a), la tige (12a) de ce vérin étant quant à elle articulée par son extrémité à une oreille latérale (19a) de manoeuvre du manchon tournant. Un tel montage souple est moins contraignant pour l'agencement du compas de liaison (9), et améliore le guidage du manchon tournant (8).

## Description

La présente invention concerne un dispositif de manoeuvre en orientation du train de roues porté par un atterrisseur d'aéronef autour de l'axe de cet atterrisseur.

La direction d'un avion est généralement assurée, lors du roulage de cet avion, par le train de roues porté par l'atterrisseur avant (ou auxiliaire), et équipant l'extrémité inférieure de la jambe télescopique de cet atterrisseur. L'orientation de ce train de roues implique ainsi la manoeuvre en rotation, autour de son axe, de la tige d'extrémité de cette jambe qui coulisse axialement par rapport à un caisson dans lequel est agencé, entre autres appareils, un amortisseur.

Les atterrisseurs sont le plus souvent constitués par une jambe comportant essentiellement un caisson tubulaire articulé à la structure de l'aéronef (ce caisson étant la pièce que l'on manoeuvre pour rentrer ou sortir le train d'atterrissage, et à laquelle sont attelés les organes moteurs, de contreventement et de verrouillage de l'atterrisseur), et une tige qui coulisse axialement à l'intérieur du caisson (cette tige portant l'essieu du train de roues et coopérant avec l'amortisseur logé dans le caisson).

On peut utiliser ainsi des atterrisseurs dont le caisson ne constitue pas une simple pièce de reprise d'efforts, mais participe également aux fonctions de guidage et d'amortissement de la tige qui coulisse directement à l'intérieur de ce caisson.

Dans ce cas, il est prévu un manchon monté tournant à l'extérieur du caisson, ce manchon étant relié par un compas à l'extrémité inférieure de la tige coulissante.

Pour faire tourner la tige autour de son axe, le mécanisme habituellement mis en oeuvre comporte au moins un vérin de manoeuvre, disposé transversalement à l'axe de la jambe, vérin dont le corps est articulé sur le caisson et la tige sur le manchon tournant. Cet état de la technique est par exemple illustré dans les documents GB-A-901 836 et US-A-2 930 547.

Le corps du ou des vérins est ainsi disposé entre deux flasques parallèles qui saillent latéralement du caisson, afin d'organiser une articulation de ce corps autour d'un axe parallèle à l'axe de la jambe. Le manchon tournant est alors nécessairement agencé entre le ou les flasques supérieurs et le ou les flasques inférieurs, ce qui limite de facto la hauteur dudit manchon tournant, lequel est par suite réalisé sous la forme d'un collier cylindrique.

Un tel agencement peut dans certains cas apparaître comme contraignant, dans la mesure où le manchon tournant risque d'être imparfaitement guidé (du fait de sa hauteur limitée), et où le compas de liaison doit être relativement long, ce qui diminue de facto la rigidité, et rend la jambe télescopique plus sensible aux vibrations. En outre, la sécurité pousse les constructeurs à agencer le compas de telle façon que sa branche supérieure soit horizontale lorsque la jambe de l'atterrisseur est sous charge statique, de sorte que les deux branches du compas sont en général de longueurs différentes.

L'invention vise précisément à résoudre ce problème, en concevant un système d'orientation plus performant.

L'invention a ainsi pour objet de réaliser un dispositif de manoeuvre en orientation des roues, autour de l'axe de la jambe, qui soit à la fois efficace et de structure simple, tout en étant moins contraignant pour les composants environnants (en particulier le compas de liaison) grâce à une plus grande souplesse au regard des déformations de la jambe.

Il s'agit plus particulièrement d'un dispositif de manoeuvre en orientation des roues équipant l'extrémité inférieure d'une jambe d'atterrisseur d'aéronef, cette jambe comportant un caisson articulé à la structure de l'aéronef, et une tige coulissant axialement à l'intérieur du caisson, ainsi qu'un manchon monté tournant à l'extérieur de ce caisson et relié par un compas à l'extrémité inférieure de la tige coulissante, ledit dispositif comportant au moins un vérin de manoeuvre disposé transversalement à l'axe de la jambe, dont le corps est articulé sur le caisson et la tige sur le manchon tournant, caractérisé en ce que le caisson présente extérieurement, au-dessus du manchon tournant, une extension latérale à laquelle le corps du vérin de manoeuvre est suspendu par une articulation à la cardan, la tige de ce vérin étant quant à elle articulée par son extrémité à une oreille latérale de manoeuvre du manchon tournant.

Conformément à un mode d'exécution particulier, l'extension latérale se termine par un manchon en saillie d'axe parallèle à l'axe de la jambe, dans lequel tourillonne un étrier entre les deux branches duquel est articulé le corps du vérin de manoeuvre en pouvant osciller librement autour d'un axe qui reste dans un plan perpendiculaire à l'axe de la jambe. En particulier encore, l'oreille latérale du manchon tournant est définie par deux flasques adjacents entre lesquels vient s'articuler l'extrémité de la tige du vérin de manoeuvre.

Il est par ailleurs avantageux que le dispositif d'orientation selon l'invention comporte deux vérins de manoeuvre agencés symétriquement par rapport à un plan médian contenant l'axe de la jambe lorsque les roues associées sont dans une position neutre. De préférence alors, les deux extensions latérales du caisson sont disposées symétriquement par rapport à ce plan médian et sont équipées d'articulations à la cardan identiques, et les deux oreilles latérales du manchon tournant sont symétriques l'une de l'autre par rapport audit plan médian en position neutre des roues.

Il est également intéressant que le manchon tournant se présente sous la forme d'un tube allongé dont la partie supérieure présente la ou les oreilles latérales, et dont la partie inférieure présente un appendice saillant servant à l'articulation de la branche supérieure du compas.

De préférence encore, la ou les extensions latérales sont d'une pièce avec le caisson, en étant de préférence directement matricées à la fabrication dudit caisson.

D'autres caractéristiques et avantages de l'invention apparaîtront plus clairement à la lumière de la description qui va suivre et des dessins annexés, concernant un mode de réalisation particulier, en référence aux figures, où :
- la figure 1 illustre une jambe d'atterrisseur équipée d'un dispositif d'orientation conforme à l'invention, cette jambe étant représentée en position détendue ;
- la figure 2 est une vue de dessus de la jambe précitée, permettant de mieux distinguer un agencement à deux vérins conforme à l'invention ;
- la figure 3 est une vue schématique à rapprocher de la vue de la figure 2, visant à mieux montrer le débattement angulaire obtenu.

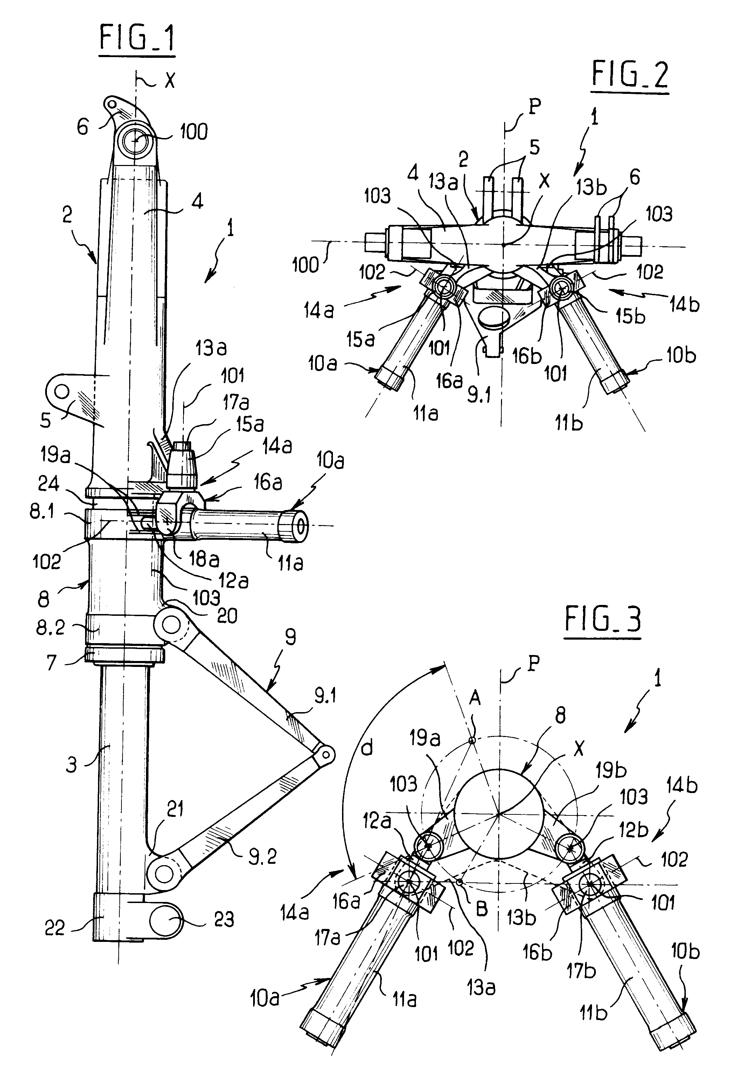

Sur les figures 1 et 2 on distingue une jambe d'atterrisseur 1, qui comporte un caisson 2 et une tige 3 coulissante axialement à l'intérieur du caisson. De façon conventionnelle, le caisson comporte en partie supérieure des branches 4 permettant son articulation autour d'un axe 100 à la structure de l'aéronef (non représentée ici), et le caisson comporte en outre des appendices saillants 5 et 6 permettant la liaison aux organes moteurs et de contreventement associés à la descente ou à la remontée du train d'atterrissage.

L'axe de la jambe télescopique 1 est noté X, et la tige coulissante 3 coulisse directement à l'intérieur du caisson 2. Cette tige présente une extrémité inférieure 22 munie d'un appendice 23 associé à la réception de l'essieu du train de roues non représenté ici.

Un manchon 8, monté tournant à l'extérieur du caisson 2, est en outre prévu, ce manchon étant relié par un compas 9 à l'extrémité inférieure de la tige coulissante 3. Le manchon tournant 8 se présente ici sous la forme d'un tube allongé, ce qui est précisément rendu possible grâce à l'agencement particulier du mécanisme de manoeuvre conforme à l'invention, agencement qui va être décrit ci-après.

Le dispositif de manoeuvre selon l'invention comporte au moins un vérin de manoeuvre disposé transversalement à l'axe de la jambe, vérin dont le corps est articulé sur le caisson et la tige sur le manchon tournant. En l'espèce, le dispositif comporte deux vérins de manoeuvre, ce qui ne constitue naturellement qu'un exemple, et les références correspondantes seront respectivement affectées des indices a ou b.

Conformément à une caractéristique de l'invention, le caisson 2 présente extérieurement, au-dessus du manchon tournant 8, une extension latérale 13a à laquelle le corps du vérin de manoeuvre 10a est suspendu par une articulation à la cardan 14a, la tige de ce vérin étant quant à elle articulée par son extrémité à une oreille latérale 19a de manoeuvre du manchon tournant.

Le vérin de manoeuvre 10a comporte ainsi un corps 11a qui est suspendu à l'extension latérale 13a par une articulation à la cardan 14a, tandis que la tige 12a de ce vérin est articulée par son extrémité à l'oreille latérale 19a qui se présente ici sous la forme de deux flasques adjacents entre lesquels vient s'articuler l'extrémité de la tige 12a du vérin de manoeuvre.

L'extension latérale 13a du caisson 2 se présente ici sous la forme d'une semelle supérieure et d'une semelle inférieure raccordées entre elles par un voile central, cette extension se terminant par un manchon en saillie 15a d'axe 101 parallèle à l'axe X de la jambe. Ce manchon en saillie 15a, que l'on pourrait également dénommer "bobine", permet d'accrocher un étrier tournant 16a sur lequel est articulé le corps 11a du vérin de manoeuvre. On distingue en effet un étrier 16a surmonté d'un axe central 17a qui est reçu dans le manchon 15a, de façon à tourner librement autour de l'axe 101, ledit étrier présentant deux branches symétriques 18a entre lesquelles est articulé le corps 11a du vérin de manoeuvre 10a, en pouvant osciller librement autour d'un axe 102 qui reste dans un plan perpendiculaire à l'axe X de la jambe.

Cet agencement procure ainsi un degré de liberté supplémentaire au corps de vérin, ce qui permet d'avoir un montage souple qui peut suivre les déformations de la jambe sans que soit exercés sur le vérin de manoeuvre des efforts parasites significatifs.

On est ainsi parvenu à supprimer le flasque inférieur qui était utilisé pour organiser l'articulation du corps de vérin de manoeuvre sur le caisson, ce qui permet de prolonger le manchon tournant vers le bas, et de réaliser ce manchon sous la forme d'un ensemble allongé dont le guidage est naturellement amélioré. Le manchon 8 se présente ainsi sous la forme d'un tube allongé dont la partie supérieure 8.1 présente l'oreille latérale 19a, et dont la partie inférieure 8.2 présente un appendice saillant 20 servant à l'articulation de la branche supérieure 9.1 du compas 9, dont la branche inférieure 9.2 est quant à elle articulée sur un appendice saillant 21 agencé au voisinage de l'extrémité inférieure de la tige coulissante 3. Le manchon tournant 8 est retenu entre une bague d'arrêt inférieure 7 solidaire du caisson 2, et une bague d'appui 24 qui est par exemple prise en sandwich entre le bord supérieur du manchon tournant et un épaulement du caisson.

Le fait de pouvoir prolonger la hauteur du manchon tournant 8, pour en améliorer le guidage, a naturellement aussi un effet bénéfique au regard du compas de liaison 9, dans la mesure où l'on est beaucoup plus libre pour agencer les branches de ce compas. L'appendice 20 étant ménagé en partie inférieure du manchon tournant 8, la longueur du compas nécessaire est diminuée, ce qui améliore la rigidité et la transmission du couple de torsion à la tige coulissante, de sorte que la jambe ainsi réalisée devient moins sensible aux vibrations. Par ailleurs, on peut maintenant aisément s'affranchir d'une éventuelle contrainte au regard de la direction prise par la branche supérieure du compas lorsque la jambe de l'atterrisseur est sous charge statique : en effet, grâce à l'amélioration du guidage du manchon tournant, il n'est plus nécessaire que la branche 9.1 soit horizontale lorsque la jambe d'atterrisseur est sous charge statique, et l'on pourra alors avantageusement prévoir que le compas 9 est constitué de deux branches identiques 9.1, 9.2, comme cela est illustré ici.

En l'espèce, on a prévu que le dispositif de manoeuvre comporte deux vérins dont le corps est articulé sur le caisson et la tige sur le manchon tournant, ce qui est mieux visible sur les figures 2 et 3.

On distingue ainsi deux vérins de manoeuvre 10a, 10b qui sont agencés symétriquement par rapport à un plan médian P contenant l'axe X de la jambe lorsque les roues associées sont dans une position neutre, position qui correspond à celle illustrée sur les figures 2 et 3. Le caisson 2 comporte deux extensions latérales 13a et 13b qui sont disposées symétriquement par rapport à ce plan médian P, et sont ici équipées d'articulation à la cardan identiques 14a, 14b, ce qui ne constitue naturellement qu'un exemple avantageux. Les organes constitutifs de l'articulation associée au vérin de manoeuvre 10b sont identiques à ceux précédemment décrits pour le vérin 10a, de sorte qu'il est inutile de les décrire à nouveau. Le caisson 2 est ainsi équipé de deux extensions latérales 13a et 13b qui se terminent chacune par un manchon en saillie 15a, 15b, d'axe 101 parallèle à l'axe X de la jambe, dans lequel tourillonne l'étrier associé 16a ou 16b. Pour ce qui est du manchon tournant 8, il est naturellement avantageux que les deux oreilles latérales 19a, 19b de ce manchon soient symétriques l'une de l'autre par rapport au plan médian P en position neutre des roues, comme cela est illustré sur la figure 3.

En outre, les extensions latérales 13a, 13b sont de préférence d'une pièce avec le caisson 2, en étant par exemple directement matricées à la fabrication dudit caisson, lequel pourra par exemple être réalisé en aluminium. Le montage du mécanisme de manoeuvre est alors extrêmement aisé, puisqu'il suffit de mettre en place chaque étrier d'articulation sur lequel est articulé un vérin de manoeuvre.

Sur la figure 3, on a représenté en pointillés la semelle inférieure des extensions 13a et 13b, et en trait continu les oreilles latérales 19a et 19b du manchon 8 associées à chacun des deux vérins de manoeuvre 10a et 10b. Lorsqu'il s'agit de faire tourner la tige coulissante avec son train de roues associé dans un sens ou dans l'autre, les chambres des deux vérins 10a et 10b sont alimentées de telle façon que l'action de ces deux vérins se conjugue sur toute la plage angulaire concernée. Pour une rotation dans le sens des aiguilles d'une montre, le point d'application 103 correspondant à l'axe d'articulation de l'extrémité de la tige du vérin 10a décrit alors un arc de cercle jusqu'au point A, ce qui correspond à un angle de débattement d, dont la valeur est ici légèrement supérieure à 90°. Dans cette position, l'axe 103 associé à l'articulation de la tige de l'autre vérin 10b vient au point B situé sur la même trajectoire circulaire. La rotation du train de roues dans l'autre sens s'effectue naturellement par symétrie du mouvement précédemment décrit.

On est ainsi parvenu à réaliser un dispositif de manoeuvre en orientation des roues autour de l'axe de la jambe, qui est à la fois efficace et de structure simple, tout en étant moins contraignant pour les composants environnants, en particulier pour le compas de liaison, grâce à une plus grande souplesse au regard des déformations de la jambe. Par ailleurs, la structure de ce dispositif permet d'avoir un manchon tournant de longueur importante, donc bien guidé sur le caisson, tandis que les articulations à la cardan montées en porte-à-faux permettent de suivre les déformations de la jambe sans transmission d'efforts parasites aux vérins de manoeuvre.

L'invention n'est pas limitée au mode de réalisation qui vient d'être décrit, mais englobe au contraire toute variante reprenant, avec des moyens équivalents, les caractéristiques essentielles énoncées plus haut.

## Revendications

1. Dispositif de manoeuvre en orientation des roues équipant l'extrémité inférieure d'une jambe (1) d'atterrisseur d'aéronef, cette jambe comportant un caisson (2) articulé à la structure de l'aéronef, et une tige (3) coulissant axialement à l'intérieur du caisson, ainsi qu'un manchon (8) monté tournant à l'extérieur de ce caisson et relié par un compas (9) à l'extrémité inférieure de la tige coulissante, ledit dispositif comportant au moins un vérin de manoeuvre (10a ; 10b) disposé transversalement à l'axe de la jambe, dont le corps (11a ; 11b) est articulé sur le caisson (2) et la tige (12a ; 12b) sur le manchon tournant (8), caractérisé en ce que le caisson (2) présente extérieurement, au-dessus du manchon tournant (8), une extension latérale (13a ; 13b) à laquelle le corps (11a ; 11b) du vérin de manoeuvre (10a ; 10b) est suspendu par une articulation à la cardan (14a ; 14b), la tige (12a ; 12b) de ce vérin étant quant à elle articulée par son extrémité à une oreille latérale (19a ; 19b) de manoeuvre du manchon tournant.

2. Dispositif selon la revendication 1, caractérisé en ce que l'extension latérale (13a ; 13b) se termine par un manchon en saillie (15a ; 15b) d'axe parallèle à l'axe de la jambe, dans lequel tourillonne un étrier (16a ; 16b) entre les deux branches duquel est articulé le corps (11a ; 11b) du vérin de manoeuvre en pouvant osciller librement autour d'un axe qui reste dans un plan perpendiculaire à l'axe de la jambe.

3. Dispositif selon la revendication 1 ou la revendication 2, caractérisé en ce que l'oreille latérale (19a ; 19b) du manchon tournant (8) est définie par deux flasques adjacents entre lesquels vient s'articuler l'extrémité de la tige (12a ; 12b) du vérin de manoeuvre.

4. Dispositif selon l'une des revendications 1 à 3, caractérisé en ce qu'il comporte deux vérins de manoeuvre (10a ; 10b) agencés symétriquement par rapport à un plan médian (P) contenant l'axe de la jambe lorsque les roues associées sont dans une position neutre.

5. Dispositif selon la revendication 4, caractérisé en ce que les deux extensions latérales (13a ; 13b) du caisson (2) sont disposées symétriquement par rapport à ce plan médian (P) et sont équipées d'articulations à la cardan identiques (14a ; 14b), et les deux oreilles latérales (19a; 19b) du manchon tournant (8) sont symétriques l'une de l'autre par rapport audit plan médian en position neutre des roues.

6. Dispositif selon l'une des revendications 1 à 5, caractérisé en ce que le manchon tournant (8) se présente sous la forme d'un tube allongé dont la partie supérieure (8.1) présente la ou les oreilles latérales (19a ; 19b), et dont la partie inférieure (8.2) présente un appendice saillant (20) servant à l'articulation de la branche supérieure (9.1) du compas (9).

7. Dispositif selon l'une des revendications 1 à 6, caractérisé en ce que la ou les extensions latérales (13a ; 13b) sont d'une pièce avec le caisson (2), en étant de préférence directement matricées à la fabrication dudit caisson.
